# EUROPEAN PATENT SPECIFICATION

(11) **EP 3 252 617 B1**
(45) Date of publication and mention of the grant of the patent: **06.03.2019**
(21) Application number: 15883027.3
(22) Date of filing: 28.08.2015
(51) Int. Cl.: G06F 17/30

(54) **TRANSACTION PROCESSING METHOD, PROCESSING NODE, CENTRAL NODE AND CLUSTER**
TRANSAKTIONSVERARBEITUNGSVERFAHREN, VERARBEITUNGSKNOTEN, ZENTRALER KNOTEN UND CLUSTER
PROCÉDÉ DE TRAITEMENT DE TRANSACTION, NOEUD DE TRAITEMENT, NOEUD CENTRAL ET GRAPPE

(30) Priority: 28.02.2015 CN 201510091291
(43) Date of publication of application: 06.12.2017
(73) Proprietor: HUAWEI TECHNOLOGIES CO., LTD., Guangdong 518129 (CN)
(72) Inventor: NIE, Yuanyuan, Shenzhen Guangdong 518129 (CN); WEN, Jijun, Shenzhen Guangdong 518129 (CN); LI, Jian, Shenzhen Guangdong 518129 (CN)
(74) Representative: Epping - Hermann - Fischer
(86) International application number: PCT/CN2015/088346
(87) International publication number: WO 2016/134590

(56) References cited:
- CN-A- 102 737 098
- CN-A- 103 116 596
- CN-A- 104 657 483
- US-A1- 2013 124 475
- US-B2- 7 328 322
- US-B2- 8 713 046

## Description

This application claims priority to Chinese Patent Application No. 201510091291.4, filed with the Chinese Patent Office on February 28, 2015 and entitled "TRANSACTION PROCESSING METHOD, PROCESSING NODE, CENTRAL NODE, AND CLUSTER".

### TECHNICAL FIELD

The present invention relates to the computer field, and in particular, to a transaction processing method, a processing node, a central node, and a cluster in the computer field.

### BACKGROUND

Multi-Version Concurrency Control (Multiple Version Concurrency Control, MVCC) is a mainstream database design mechanism. This mechanism is used in an Oracle database management system, an Innode storage engine, an SQL Server database management system, a PostgreSQL database management system, and the like. In the MVCC mechanism, to improve concurrent execution efficiency of a database, a new version is generated when a record is updated. Therefore, a record in the database may have multiple versions, and different versions of the record are visible to different read-write transactions. There is no mutual conflict between the read-write transactions, and the concurrent execution efficiency is high.

In a database management system based on the MVCC mechanism, when visibility of a record to different read-write transactions is determined, a transaction snapshot (Snapshot) needs to be obtained. The transaction snapshot is used to indicate all running transactions at a particular time point, and different versions of transaction snapshots indicate all running transactions at different time points. For example, the system obtains a transaction snapshot at the beginning of a query and in an execution process, and determines, by using the transaction snapshot, whether a record being read is visible. If a transaction for which a record is inserted exists in the transaction snapshot, it indicates that the transaction for which the record is inserted is running at the beginning of the query. According to a transaction visibility rule, the record is invisible to a query record.

In a specific example, a statement 1 starts before a statement 2, and the statement 1 is running when the statement 2 starts. A record that is inserted or modified in a running process of the statement 1 is invisible to the statement 2. Even if the statement 1 is committed, a modification by the statement 1 is still invisible to the statement 2 in a later time segment. The foregoing mechanism may be implemented by using a transaction snapshot. A transaction snapshot is obtained at the beginning of the statement 2. Because the statement 1 is running at this moment, the transaction snapshot records a transaction of the statement 1. Whether a transaction corresponding to a record exists in the transaction snapshot is determined in an execution process of the statement 2, and if the transaction exists, the record is invisible.

Similarly, in a cluster environment, a node in a cluster also needs to obtain a transaction snapshot when executing a transaction, to ensure transaction visibility in the cluster environment. Generally, all transaction snapshots are managed and maintained by a central node or a central component. For example, in a Greenplum cluster, all transaction snapshots are managed by a coordinator Coordinator node; in a PG-XC cluster, all transaction snapshots are managed by a dedicated component referred to as a global transaction manager (Global transaction Manager, GTM).

In a cluster environment, a centralized allocation and obtaining manner is limited to a processing capability of a central node, which includes a network bandwidth limitation, a central processing unit (Central Processing Unit, CPU) resource limitation, and the like of the central node. Each time a processing node obtains a transaction snapshot, the processing node needs to send a related message of the transaction snapshot to the central node, and then receive a result returned from the central node. Message sending and receiving speeds and a processing speed of the processing node have great impact on an obtaining speed. In a heavy load case, massive related messages of transaction snapshots are sent to the central node, and a network is filled with messages, resulting in a slow message processing speed. In addition, the central node needs to process massive requests, resulting in a slow processing speed, and greatly affecting concurrent processing performance of a cluster.

CN 103116596 A relates to a system and method of performing snapshot isolation in distributed databases. Each node stores local snapshot information that enforces snapshot isolation for that node. The method includes partially processing a distributed transaction by a first node, receiving a global commit identifier from a coordinator, and continuing to process the distributed transaction, by the first node and a second node, in accordance with the global commit identifier. US 7,328,322 B2 discloses that transactions are granted concurrent access to a data item through the use of an optimistic concurrency algorithm. Each transaction gets its own instance of the data item, such as in a cache or in an entity bean, such that it is not necessary to lock the data. The instances can come from the data or from other instances. When a transaction updates the data item, the optimistic concurrency algorithm ensures that the other instances are notified that the data item has been changed and that it is necessary to read a new instance, from the database or from an update instance.

### SUMMARY

According to the invention there are provided a transaction processing method performed on a processing node (according to claim 1), a transaction processing method performed on a central node (according to claim 3), a processing node (according to claim 4), a central node (according to claim 6) and a cluster (according to claim 7). Preferable features of the invention are defined in the dependent claims.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a transaction processing method according to an embodiment in the present invention;
FIG. 2 is a schematic flowchart of a transaction processing method according to an embodiment in the present invention;
FIG. 3 is a schematic flowchart of a transaction processing method according to an embodiment in the present invention;
FIG. 4 is a schematic block diagram of a processing node according to an embodiment in the present invention;
FIG. 5 is a schematic block diagram of a processing node according to another embodiment in the present invention;
FIG. 6 is a schematic block diagram of a central node according to an embodiment in the present invention; and
FIG. 7 is a schematic block diagram of a central node according to another embodiment in the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The embodiments of the present invention are applicable to a distributed data processing system or a cluster environment. In a cluster, multiple servers are centralized to provide services of a same type. The cluster may be considered as one server from a perspective of a client. In the cluster, multiple computers are used to perform concurrent computing to obtain a high computing speed. The cluster includes a central node (Coordinator Node, CN) used for centralized scheduling and management, and multiple processing nodes (Processing Node, PN) used to execute a transaction. A central node in the embodiments of the present invention may be a coordinator node in a Greenplum cluster, a GTM component in a PG-XC cluster, or the like. The embodiments of the present invention may be further applicable to a distributed KEY/VALUE database, a distributed columnar database, a distributed graph database, or the like, which is not limited in the embodiments of the present invention.

It should be understood that global snapshot information in the embodiments of the present invention is used to indicate a global transaction snapshot, and the global transaction snapshot includes a transaction identifier of a running transaction in a cluster, so as to notify a processing node in the cluster of the current running transaction.

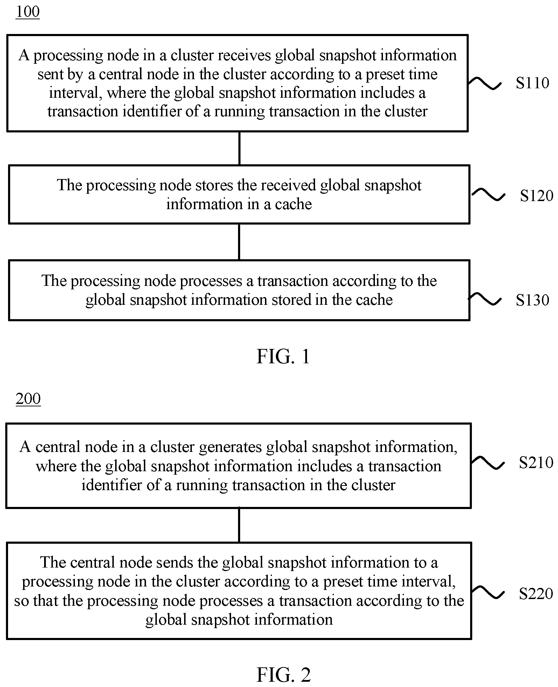

FIG. 1 shows a schematic flowchart of a transaction processing method 100 according to another embodiment in the present invention. The method 100 is executed by a processing node in a cluster, and the method 100 includes the following steps:
S110. The processing node in the cluster receives global snapshot information sent by a central node in the cluster according to a preset time interval, where the global snapshot information includes a transaction identifier of a running transaction in the cluster.
S120. The processing node stores the received global snapshot information in a cache.
S130. The processing node processes the transaction according to the global snapshot information stored in the cache.

Therefore, in the transaction processing method provided in this embodiment of the present invention, a processing node receives global snapshot information periodically sent by a central node, and locally caches the global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction snapshot processing efficiency can be improved.

It should be understood that the foregoing transaction identifier may also be referred to as a transaction number.

Specifically, the processing node receives the global snapshot information that is periodically sent by the central node to the processing node, and stores the global snapshot information in the cache. The global snapshot information includes the transaction identifier of the running transaction in the cluster. The time interval for sending the global snapshot information by the central node to the processing node may be preset to 50 us, that is, the central node pushes latest global snapshot information every 50 us to all processing nodes. When the processing node needs to use global snapshot information, the processing node obtains the global snapshot information stored in the local cache to process the transaction.

When the processing node needs to use global snapshot information during transaction processing, the processing node no longer frequently interacts with the central node to obtain the global snapshot information, but obtains locally cached global snapshot information. Therefore, in a heavy load case, a quantity of message receiving and transmitting times on the central node is reduced, a processing speed of the central node can be ensured, and concurrent performance of the cluster can be improved. The global snapshot information locally cached by the processing node may be periodically sent by the central node to the processing node, or may be aperiodically sent by the central node, which is not limited in this embodiment of the present invention.

Accordingly, that the processing node processes the transaction according to the global snapshot information stored in the cache includes:
processing, by the processing node, the transaction according to the global snapshot information sent by the central node according to the preset time interval; or
processing, by the processing node, the transaction according to global snapshot information included in an acknowledgement message sent by the central node, where the acknowledgement message is used to indicate that the central node completes an update of the global snapshot information according to an update message sent by the processing node, and the update message is used to indicate an end of transaction processing of the processing node.

Optionally, in an embodiment, the global snapshot information further includes a snapshot version number, where the snapshot version number is used to identify a version of the global snapshot information. The method 100 further includes:
sending, to the central node when the processing node finishes processing the transaction, the update message that indicates the end of the transaction processing of the processing node, so that the central node updates the global snapshot information according to the update message;
receiving, by the processing node, the acknowledgement message that is sent by the central node and that is used to indicate that the central node completes the update of the global snapshot information, where the acknowledgement message includes updated global snapshot information; and
comparing, by the processing node, a snapshot version number included in the global snapshot information in the acknowledgement message with the snapshot version number included in the global snapshot information stored in the cache, and updating, by the processing node, the global snapshot information stored in the cache to the global snapshot information in the acknowledgement message when the snapshot version number included in the global snapshot information in the acknowledgement message is higher than the snapshot version number included in the global snapshot information stored in the cache.

Specifically, when starting to process a non-read-only transaction, the processing node sends a first update message to the central node. The first update message is used to instruct the central node to update, according to a fact that the processing node starts to process the non-read-only transaction, global snapshot information stored by the central node. The updating includes updating the snapshot version number and recording the non-read-only transaction in the global snapshot information. For example, according to the first update message, the central node adds 1 to the snapshot version number in the global snapshot information relative to a previous version, and records a transaction identifier of the non-read-only transaction in the global snapshot information.

When finishing processing the read-only transaction, the processing node sends a second update message to the central node. The second update message is used to instruct the central node to update, according to a fact that the processing nodes finishes processing the non-read-only transaction, the global snapshot information stored by the central node. The updating includes updating the snapshot version number and deleting the non-read-only transaction from the global snapshot information. For example, according to the second update message, the central node adds 1 to the snapshot version number in the global snapshot information relative to a previous version, and deletes the transaction identifier of the non-read-only transaction from the global snapshot information.

After updating the stored global snapshot information according to the second update message, the central node sends the updated global snapshot information to the processing node by using the acknowledgement message. After receiving the updated global snapshot information, the processing node compares a snapshot version number in the updated global snapshot information with the snapshot version number in the global snapshot information stored in the cache. When the snapshot version number in the updated global snapshot information is higher than the snapshot version number included in the global snapshot information stored in the cache, the processing node updates the global snapshot information stored in the cache to the updated global snapshot information in the acknowledgement message. When the snapshot version number in the updated global snapshot information is equal to or less than the snapshot version number in the global snapshot information stored in the cache, the processing node may receive, during a period from sending the second update message to receiving the acknowledgement message, new global snapshot information pushed by the central node. In this case, the processing node does not update the global snapshot information stored in the cache. The acknowledgement message may be an ACK (Acknowledgement) message, or may be another control message, which is not limited in this embodiment of the present invention. In this embodiment of the present invention, relative accuracy and validity of the global snapshot information stored in the cache of the processing node can be ensured.

Therefore, in the transaction processing method provided in this embodiment of the present invention, a processing node receives global snapshot information periodically sent by a central node, and locally caches the global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction snapshot processing efficiency can be improved.

The transaction processing method according to this embodiment of the present invention is described above in detail from a perspective of the processing node with reference to FIG. 1. A transaction processing method according to an embodiment of the present invention is described in the following in detail from a perspective of a central node with reference to FIG. 2.

FIG. 2 shows a schematic flowchart of a transaction processing method 200 according to an embodiment in the present invention. The method 200 is executed by a central node in a cluster, and the method 200 includes the following steps:
S210. The central node in the cluster generates global snapshot information, where the global snapshot information includes a transaction identifier of a running transaction in the cluster. S220. The central node sends the global snapshot information to a processing node in the cluster according to a preset time interval, so that the processing node processes the transaction according to the global snapshot information.

Therefore, in the transaction processing method provided in this embodiment of the present invention, a central node in a cluster sends latest global snapshot information to each processing node according to a preset time interval, so that the processing node can store the global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

Specifically, in an existing transaction snapshot processing method, during transaction processing, a processing node sends a message to a central node to request global snapshot information. After receiving the message requesting the global snapshot information, the central node returns an acknowledgement message and sends latest global snapshot information to the processing node. Massive messages need to be sent between the central node and the processing node in this process.

In the transaction snapshot processing method in this embodiment of the present invention, according to a related message that is sent by each processing node and that is about a start or an end of transaction processing of each processing node, the central node generates the global snapshot information in real-time and periodically sends the global snapshot information to the processing node. The global snapshot information includes the transaction identifier of the running transaction in the cluster, so that when the processing node needs to use global snapshot information, the processing node obtains locally cached global snapshot information to process the transaction. The time interval for sending the global snapshot information by the central node to the processing node may be preset to 50 us, that is, the central node pushes latest global snapshot information every 50 us to all processing nodes.

Optionally, in an embodiment, the global snapshot information further includes a snapshot version number, where the snapshot version number is used to identify a version of the global snapshot information, so that the processing node updates global snapshot information in a cache according to a number of the version.

Specifically, the central node may store multiple versions of global snapshot information at different time points, and store latest global snapshot information at a current time point. The global snapshot information not only includes the transaction identifier of the running transaction, but also includes the snapshot version number used to identify the version of the global snapshot information. Snapshot version numbers of different versions of global snapshot information may be set to monotonically increasing, for example, the setting may be that 1 is added to the snapshot version number each time the version is updated, which is not limited in this embodiment of the present invention. The snapshot version number is set in the global snapshot information, making it convenient for the processing node to update the global snapshot information in the cache according to a number of the version.

Optionally, in an embodiment, the method 200 further includes:
receiving, by the central node, an update message sent by the processing node, where the update message is used to indicate an end of transaction processing of the processing node;
updating, by the central node, the global snapshot information according to the update message; and
sending, by the central node, an acknowledgement message to the processing node, where the acknowledgement message includes updated global snapshot information.

Specifically, the central node is responsible for maintaining and updating the global snapshot information. When starting and finishing processing a non-read-only transaction, the processing node sends, to the central node, a message used to instruct the central node to perform updating, so that the central node updates the global snapshot information according to the message. For example, the central node updates the snapshot version number, the transaction identifier of the running transaction in the global snapshot information, and the like.

For example, when starting to process a non-read-only transaction, the processing node sends a first update message to the central node. The first update message is used to instruct the central node to update, according to a fact that the processing node starts to process the non-read-only transaction, global snapshot information stored by the central node. The updating includes updating the snapshot version number and recording the non-read-only transaction in the global snapshot information. For example, according to the first update message, the central node adds 1 to the snapshot version number in the global snapshot information relative to a previous version, and records a transaction identifier of the non-read-only transaction in the global snapshot information.

For another example, when finishing processing the non-read-only transaction, the processing node sends a second update message to the central node. The second update message is used to instruct the central node to update, according to a fact that the processing node finishes processing the non-read-only transaction according to the processing node, the global snapshot information stored by the central node. The updating includes updating the snapshot version number and deleting the non-read-only transaction from the global snapshot information. For example, according to the second update message, the central node adds 1 to the snapshot version number in the global snapshot information relative to a previous version, and deletes the transaction identifier of the non-read-only transaction from the global snapshot information. After updating the stored global snapshot information according to the update message that is sent by the processing node and that is used to indicate that the processing node finishes processing the transaction, the central node sends the updated global snapshot information to the processing node by using the acknowledgement message. Therefore, global snapshot information that is stored in the cache of the processing node and that is used to perform the non-read-only transaction may be the global snapshot information periodically sent by the central node to the processing node; or the local transaction snapshot is the global snapshot information obtained after the central node updates, according to the update message, the global snapshot information stored by the central node.

After updating the stored global snapshot information, the central node sends the updated global snapshot information to the processing node by using the acknowledgement message, so that relative accuracy and validity of the global snapshot information stored in the cache of the processing node can be ensured. The acknowledgement message may be an ACK (Acknowledgement) message, or may be another control message, which is not limited in this embodiment of the present invention.

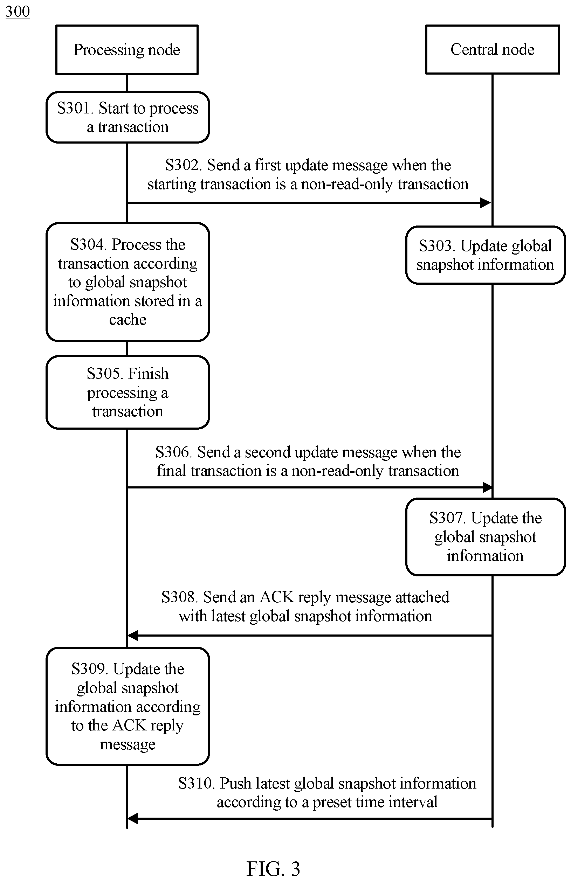

The transaction processing method in the embodiments of the present invention is described in the following in detail with reference to a specific example. FIG. 3 shows a schematic flowchart of a transaction processing method 300 according to an embodiment in the present invention. As shown in FIG. 3, the method 300 includes the following steps:
S301. A processing node starts to process the transaction.
S302. The processing node sends a first update message to a central node when the starting transaction is a non-read-only transaction, where the first update message instructs the central node to update, according to a fact that the processing node starts to process the non-read-only transaction, global snapshot information stored by the central node.
S303. The central node updates the stored global snapshot information, which includes: adding 1 to a snapshot version number in the global snapshot information relative to a previous version, and recording a transaction number of the non-read-only transaction in the global snapshot information.
S304. The processing node processes the transaction according to global snapshot information stored in a cache, and does not need to send a message to the central node.
S305. The processing node finishes processing a transaction.
S306. The processing node sends a second update message to the central node when the final transaction is a non-read-only transaction, where the second update message instructs the central node to update, according to a fact that the processing node starts to process the non-read-only transaction, the global snapshot information stored by the central node.
S307. The central node updates the stored global snapshot information, which includes: adding 1 to the snapshot version number in the global snapshot information relative to a previous version, and deleting a transaction number of the non-read-only transaction from the global snapshot information.
S308. The central node sends an ACK reply message to the processing node, where latest global snapshot information is attached in the ACK reply message.
S309. After receiving the ACK reply message, the processing node obtains the attached global snapshot information from the ACK reply message, compares a snapshot version number in locally cached global snapshot information with a snapshot version number in the global snapshot information attached in the ACK reply message, and updates the locally cached global snapshot information to the attached global snapshot information if the snapshot version number in the attached global snapshot information is higher than the snapshot version number in the locally cached global snapshot information.
S310. The central node pushes the global snapshot information to all processing nodes by using a message according to a preset time interval. The preset time interval may be configured as 50 us. Therefore, in the transaction snapshot processing method, the processing node, the central node, and a cluster provided in this embodiment of the present invention, the central node in the cluster sends latest global snapshot information to each processing node according to a preset time interval, and the processing node stores the global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

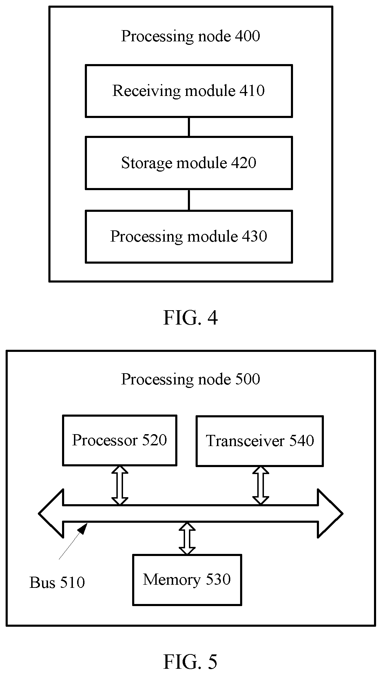

The transaction processing method according to the embodiments of the present invention is described above in detail with reference to FIG. 1 to FIG. 3, and a processing node and a central node according to embodiments of the present invention are described in the following in detail with reference to FIG. 4 to FIG. 7.

FIG. 4 shows a schematic block diagram of a processing node 400 according to an embodiment of the present invention. The processing node 400 belongs to a cluster and includes:
a receiving module 410, configured to receive global snapshot information sent by a central node in the cluster according to a preset time interval, where the global snapshot information includes a transaction identifier of a running transaction in the cluster;
a storage module 420, configured to store, in a cache, the global snapshot information received by the receiving module 410; and
a processing module 430, configured to process the transaction according to the global snapshot information stored in the cache.

Therefore, in the processing node provided in this embodiment of the present invention, global snapshot information is locally cached, and when applying for global snapshot information during transaction processing, the processing node does not need to obtain latest snapshot information from a central node in a complex message receiving and transmitting manner, but obtains locally cached global snapshot information. Therefore, network overheads can be reduced, and transaction snapshot processing efficiency can be improved.

Optionally, in an embodiment, the global snapshot information further includes a snapshot version number, where the snapshot version number is used to identify a version of the global snapshot information. The processing node 400 further includes:
a sending module, configured to send, to the central node when the processing node 400 finishes processing the transaction, an update message that indicates an end of transaction processing of the processing node, so that the central node updates the global snapshot information according to the update message.

The receiving module 410 is further configured to receive an acknowledgement message that is sent by the central node and that is used to indicate that the central node completes an update of the global snapshot information, where the acknowledgement message includes updated global snapshot information.

The storage module 420 is further configured to compare a snapshot version number included in the global snapshot information in the acknowledgement message received by the receiving module 410 with the snapshot version number included in the global snapshot information stored in the cache, and the processing node updates the global snapshot information stored in the cache to the global snapshot information in the acknowledgement message when the snapshot version number included in the global snapshot information in the acknowledgement message is higher than the snapshot version number included in the global snapshot information stored in the cache.

Optionally, in this embodiment of the present invention, the processing module 430 is specifically configured to:
process the transaction according to the global snapshot information sent by the central node according to the preset time interval; or
process the transaction according to the global snapshot information included in the acknowledgement message sent by the central node, where the acknowledgement message is used to indicate that the central node completes the update of the global snapshot information according to the update message sent by the processing node 400, and the update message is used to indicate the end of the transaction processing of the processing node 400.

It should be understood that the processing node 400 according to this embodiment of the present invention may be corresponding to an entity that executes the method in the embodiments of the present invention. The foregoing and other operations and/or functions of the modules in the processing node 400 are used to implement corresponding procedures of the methods in FIG. 1 to FIG. 3, and details are not described herein for brevity.

Therefore, in the processing node provided in this embodiment of the present invention, global snapshot information is locally cached, and when applying for global snapshot information during transaction processing, the processing node does not need to obtain latest snapshot information from a central node in a complex message receiving and transmitting manner, but obtains locally cached global snapshot information. Therefore, network overheads can be reduced, and transaction snapshot processing efficiency can be improved.

As shown in FIG. 5, an embodiment of the present invention further provides a central node 500. The central node 500 includes a bus 510, a processor 520, a memory 530, and a transceiver 540. The processor 520, the memory 530, and the transceiver 540 are connected by using the bus 510. The transceiver 540 invokes, by using the bus 510, a program stored in the memory 530, and is configured to receive global snapshot information sent by a central node in the cluster according to a preset time interval. The global snapshot information includes a transaction identifier of a running transaction in the cluster.

The memory 530 is configured to store, in a cache, the global snapshot information received by the transceiver 540.

The processor 520 is configured to process the transaction according to the global snapshot information stored in the cache.

Therefore, in the processing node provided in this embodiment of the present invention, global snapshot information is locally cached, and when applying for global snapshot information during transaction processing, the processing node does not need to obtain latest snapshot information from a central node in a complex message receiving and transmitting manner, but obtains locally cached global snapshot information. Therefore, network overheads can be reduced, and transaction snapshot processing efficiency can be improved.

It should be understood that, in this embodiment of the present invention, the processor 520 may be a central processing unit (Central Processing Unit, CPU), or the processor 520 may be another general purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate or a transistor logic device, a discrete hardware component, or the like. The general purpose processor may be a microprocessor, or this processor may be any normal processor, or the like.

The memory 530 may include a read-only memory and a random access memory, and provide an instruction and data to the processor 520. A part of the memory 530 may further include a nonvolatile random access memory. For example, the memory 530 may further store information about a device type.

In addition to a data bus, the bus 510 may further include a power bus, a control bus, a status signal bus, and the like. However, for clarity of description, various buses are marked as the bus 510 in the figure.

In an implementation process, the steps of the foregoing method may be completed by using an integrated logic circuit of hardware in the processor 520 or an instruction in a form of software. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 530. The processor 520 reads information in the memory 530, and completes the steps of the foregoing method in combination with hardware of the processor 520. To avoid repetition, details are not described herein.

Optionally, in an embodiment, the global snapshot information further includes a snapshot version number, where the snapshot version number is used to identify a version of the global snapshot information. The transceiver 540 is further configured to: send, to the central node when the processing node 500 finishes processing the transaction, an update message that indicates an end of transaction processing of the processing node, so that the central node updates the global snapshot information according to the update message; and receive an acknowledgement message that is sent by the central node and that is used to indicate that the central node completes an update of the global snapshot information, where the acknowledgement message includes updated global snapshot information.

The memory 530 is further configured to compare a snapshot version number included in the global snapshot information in the acknowledgement message received by the transceiver 540 with the snapshot version number included in the global snapshot information stored in the cache, and the processing node updates the global snapshot information stored in the cache to the global snapshot information in the acknowledgement message when the snapshot version number included in the global snapshot information in the acknowledgement message is higher than the snapshot version number included in the global snapshot information stored in the cache. Optionally, in an embodiment, the processor 520 is specifically configured to:
process the transaction according to the global snapshot information sent by the central node according to the preset time interval; or
process the transaction according to the global snapshot information included in the acknowledgement message sent by the central node, where the acknowledgement message is used to indicate that the central node completes the update of the global snapshot information according to the update message sent by the processing node, and the update message is used to indicate the end of the transaction processing of the processing node.

It should be understood that the processing node 500 according to this embodiment of the present invention may be corresponding to an entity that executes the method in the embodiments of the present invention, and may also be corresponding to the processing node 400 according to the embodiments of the present invention. The foregoing and other operations and/or functions of the modules in the processing node 500 are used to implement corresponding procedures of the methods in FIG. 1 to FIG. 3, and details are not described herein for brevity.

Therefore, in the processing node provided in this embodiment of the present invention, global snapshot information is locally cached, and when applying for global snapshot information during transaction processing, the processing node does not need to obtain latest snapshot information from a central node in a complex message receiving and transmitting manner, but obtains locally cached global snapshot information. Therefore, network overheads can be reduced, and transaction snapshot processing efficiency can be improved.

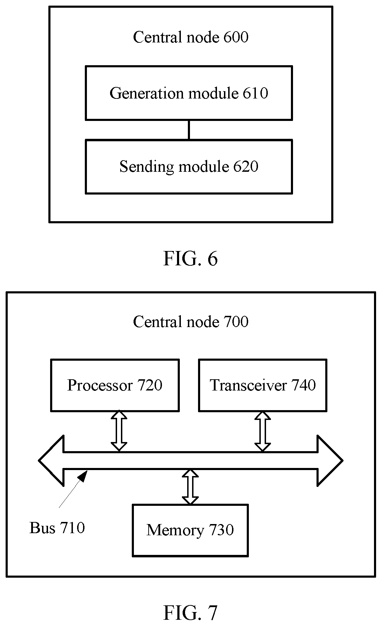

FIG. 6 shows a schematic block diagram of a central node 600 according to an embodiment of the present invention. The central node 600 belongs to a cluster and includes:
a generation module 610, configured to generate global snapshot information, where the global snapshot information includes a transaction identifier of a running transaction in the cluster; and
a sending module 620, configured to send the global snapshot information generated by the generation module 610 to a processing node in the cluster according to a preset time interval, so that the processing node processes the transaction according to the global snapshot information.

Therefore, in the central node provided in this embodiment of the present invention, latest global snapshot information is sent to each processing node according to a preset time interval, so that the processing node can store global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

Optionally, in an embodiment, the global snapshot information further includes a snapshot version number, where the snapshot version number is used to identify a version of the global snapshot information, so that the processing node updates global snapshot information in a cache according to a number of the version.

Optionally, in an embodiment, the central node further includes:
a receiving module, configured to receive an update message sent by the processing node, where the update message is used to indicate an end of transaction processing of the processing node; and
an update module, configured to update the global snapshot information according to the update message received by the receiving module.

The sending module 620 is further configured to:
send an acknowledgement message to the processing node, where the acknowledgement message includes updated global snapshot information.

It should be understood that the central node 600 according to this embodiment of the present invention may be corresponding to an entity that executes the method in the embodiments of the present invention. The foregoing and other operations and/or functions of the modules in the central node 600 are used to implement corresponding procedures of the methods in FIG. 1 to FIG. 3, and details are not described herein for brevity.

Therefore, in the central node provided in this embodiment of the present invention, latest global snapshot information is sent to each processing node according to a preset time interval, so that the processing node can store global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

As shown in FIG. 7, an embodiment of the present invention further provides a central node 700. The central node 700 includes a bus 710, a processor 720, a memory 730, and a transceiver 740. The processor 720, the memory 730, and the transceiver 740 are connected by using the bus 710. The processor 720 invokes, by using the bus 710, a program stored in the memory 730 to generate global snapshot information. The global snapshot information includes a transaction identifier of a running transaction in the cluster.

The transceiver 740 is configured to send the global snapshot information generated by the generation module to a processing node in the cluster according to a preset time interval, so that the processing node processes the transaction according to the global snapshot information. Therefore, in the central node provided in this embodiment of the present invention, latest global snapshot information is sent to each processing node according to a preset time interval, so that the processing node can store global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

It should be understood that, in this embodiment of the present invention, the processor 720 may be a central processing unit (Central Processing Unit, CPU), or the processor 720 may be another general purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate or a transistor logic device, a discrete hardware component, or the like. The general purpose processor may be a microprocessor, or this processor may be any normal processor, or the like.

The memory 730 may include a read-only memory and a random access memory, and provide an instruction and data to the processor 720. A part of the memory 730 may further include a nonvolatile random access memory. For example, the memory 730 may further store information about a device type.

In addition to a data bus, the bus 710 may further include a power bus, a control bus, a status signal bus, and the like. However, for clarity of description, various buses are marked as the bus 710 in the figure.

In an implementation process, the steps of the foregoing method may be completed by using an integrated logic circuit of hardware in the processor 720 or an instruction in a form of software. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 730. The processor 720 reads information in the memory 730, and completes the steps of the foregoing method in combination with hardware of the processor 720. To avoid repetition, details are not described herein.

Optionally, in an embodiment, the global snapshot information further includes a snapshot version number, where the snapshot version number is used to identify a version of the global snapshot information, so that the processing node updates global snapshot information in a cache according to a number of the version.

Optionally, in an embodiment, the transceiver 740 is further configured to:
receive an update message sent by the processing node, where the update message is used to indicate an end of transaction processing of the processing node.

The processor 720 is further configured to update the global snapshot information according to the update message received by the receiving module.

The transceiver 740 is further configured to send an acknowledgement message to the processing node, where the acknowledgement message includes updated global snapshot information.

It should be understood that the central node 700 according to this embodiment of the present invention may be corresponding to an entity that executes the method in the embodiments of the present invention, or may be corresponding to the central node 600 according to the embodiments of the present invention. The foregoing and other operations and/or functions of the modules in the central node 700 are used to implement corresponding procedures of the methods in FIG. 1 to FIG. 3, and details are not described herein for brevity.

Therefore, in the central node provided in this embodiment of the present invention, latest global snapshot information is sent to each processing node according to a preset time interval, so that the processing node can store global snapshot information. When applying for global snapshot information during transaction processing, the processing node does not need to obtain latest snapshot information from the central node in a complex message receiving and transmitting manner, but obtains locally cached global snapshot information. Therefore, network overheads can be reduced, and transaction processing efficiency can be improved.

An embodiment of the present invention further provides a cluster, and the cluster includes multiple processing nodes according to the embodiments of the present invention and the central node according to the embodiments of the present invention.

It should be understood that, in the embodiments of the present invention, "Y corresponding to X" indicates that Y is associated with X and that Y may be determined according to X. However, it should be further understood that determining Y according to X does not mean that Y is determined only according to X, and Y may also be determined according to X and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A transaction processing method (100), comprising:
receiving (S110), by a processing node (400) in a cluster including multiple processing nodes (400), latest global snapshot information sent by a central node (600) in the cluster to each processing node (400) according to a preset time interval, wherein the global snapshot information comprises a transaction identifier, so as to notify the processing node (400) of a current running transaction in the cluster, and wherein the global snapshot information further comprises a snapshot version number, the snapshot version number is used to identify a version of the global snapshot information;
storing (S120), by the processing node (400), the received global snapshot information in a cache;
sending (S302), by the processing node (400) in the cluster, a first update message to the central node (600) in the cluster when the processing node (400) starts processing a non-read-only transaction, wherein the first update message is used to instruct the central node (600) to update, according to a fact that the processing node (400) starts to process the non-read-only transaction, global snapshot information stored by the central node (600);
processing (S130), by the processing node (400), the transaction according to the global snapshot information stored in the cache without obtaining latest snapshot information from the central node (600);
sending (S306), to the central node (600) when the processing node (400) finishes processing the non-read-only transaction, a second update message that indicates an end of transaction processing of the processing node (400), so that the central node (600) updates the global snapshot information according to the second update message;
receiving, by the processing node (400), an acknowledgement message that is sent by the central node (600) and that is used to indicate that the central node (600) completes an update of the global snapshot information, wherein the acknowledgement message comprises updated global snapshot information; and
comparing, by the processing node (400), a snapshot version number comprised in the global snapshot information in the acknowledgement message with the snapshot version number comprised in the global snapshot information stored in the cache, and updating (S309), by the processing node (400), the global snapshot information stored in the cache to the global snapshot information in the acknowledgement message when the snapshot version number comprised in the global snapshot information in the acknowledgement message is higher than the snapshot version number comprised in the global snapshot information stored in the cache.

2. The method according to claim 1, wherein the processing (S130), by the processing node (400), the transaction according to the global snapshot information stored in the cache comprises:
processing, by the processing node (400), the transaction according to the global snapshot information sent by the central node (600) according to the preset time interval; or
processing, by the processing node (400), the transaction according to the global snapshot information comprised in the acknowledgement message sent by the central node (600), wherein the acknowledgement message is used to indicate that the central node (600) completes the update of the global snapshot information according to the second update message sent by the processing node (400).

3. A transaction processing method (200), comprising:
generating (S210), by a central node (600) in a cluster including multiple processing nodes (400), latest global snapshot information, wherein the global snapshot information comprises a transaction identifier, so as to notify a processing node (400) of a current running transaction in the cluster, and wherein the global snapshot information further comprises a snapshot version number, and the snapshot version number is used to identify a version of the global snapshot information, so that the processing nodes (400) update global snapshot information in a cache according to a number of the version; and
sending (S220), by the central node (600), the global snapshot information to each processing node (400) in the cluster according to a preset time interval, so that each processing node (400) processes transactions according to the global snapshot information;
receiving, by the central node (600), a first update message sent by a first processing node (400), wherein the first update message is used to indicate a start of transaction processing of a non-read-only transaction of the first processing node (400);
updating (S303), by the central node (600), the global snapshot information according to the first update message; and
receiving, by the central node (600), a second update message sent by the first processing node (400), wherein the update message is used to indicate an end of transaction processing of the non-read-only transaction of the first processing node (400);
updating (S307), by the central node (600), the global snapshot information according to the second update message; and
sending (S308), by the central node (600), an acknowledgement message to the first processing node (400), wherein the acknowledgement message comprises updated global snapshot information, so that the first processing node (400) updates global snapshot information in a cache according to a number of the version.

4. A processing node (400), wherein the processing node (400) belongs to a cluster including multiple processing nodes (400), and the processing node (400) comprises:
a receiving module (410), configured to receive latest global snapshot information sent by a central node (600) in the cluster to each processing node (400) according to a preset time interval, wherein the global snapshot information comprises a transaction identifier, so as to notify the processing node (400) of a current running transaction in the cluster, and wherein the global snapshot information further comprises a snapshot version number, the snapshot version number is used to identify a version of the global snapshot information;
a storage module (420), configured to store, in a cache, the global snapshot information received by the receiving module; and
a sending module, configured to send, to the central node (600) when the processing node (400) starts processing a non-read-only transaction, a first update message that indicates a start of the non-read-only transaction of the processing node (400), so that the central node (600) updates the global snapshot information according to the first update message;
a processing module (430), configured to process the transaction according to the global snapshot information stored in the cache without obtaining latest snapshot information from the central node (600);
wherein the sending module is further configured to send, to the central node (600) when the processing node (400) finishes processing the non-read-only transaction, a second update message that indicates an end of transaction processing of the processing node (400), so that the central node (600) updates the global snapshot information according to the second update message;
the receiving module (410) is further configured to receive an acknowledgement message that is sent by the central node (600) and that is used to indicate that the central node (600) completes an update of the global snapshot information, wherein the acknowledgement message comprises updated global snapshot information; and
the storage module (420) is further configured to compare a snapshot version number comprised in the global snapshot information in the acknowledgement message received by the receiving module with the snapshot version number comprised in the global snapshot information stored in the cache, and the processing node (400) updates the global snapshot information stored in the cache to the global snapshot information in the acknowledgement message when the snapshot version number comprised in the global snapshot information in the acknowledgement message is higher than the snapshot version number comprised in the global snapshot information stored in the cache.

5. The processing node (400) according to claim 4, wherein the processing module (430) is specifically configured to:
process the transaction according to the global snapshot information sent by the central node (600) according to the preset time interval; or
process the transaction according to the global snapshot information comprised in the acknowledgement message sent by the central node (600), wherein the acknowledgement message is used to indicate that the central node (600) completes the update of the global snapshot information according to the second update message sent by the processing node (400).

6. A central node (600), wherein the central node (600) belongs to a cluster including multiple processing nodes (400), and the central node (600) comprises:
a generation module (610), configured to generate latest global snapshot information, wherein the global snapshot information comprises a current transaction identifier, so as to notify a processing node (400) of a running transaction in the cluster, and wherein the global snapshot information further comprises a snapshot version number, and the snapshot version number is used to identify a version of the global snapshot information, so that the processing node (400) updates global snapshot information in a cache according to a number of the version;
a sending module (620), configured to send the global snapshot information generated by the generation module to each processing node (400) in the cluster according to a preset time interval, so that each processing node (400) processes transactions according to the global snapshot information;
a receiving module, configured to receive a first update message sent by a first processing node (400), wherein the first update message is used to indicate a start of transaction processing of a non-read-only transaction of the first processing node (400); and
an update module, configured to update the global snapshot information according to the first update message received by the receiving module; wherein
the receiving module is further configured to receive a second update message sent by the first processing node (400), wherein the update message is used to indicate an end of transaction processing of the non-read-only transaction of the first processing node (400); and
the update module is further configured to update the global snapshot information according to the second update message received by the receiving module; and
the sending module (620) is further configured to:
send an acknowledgement message to the processing node (400), wherein the acknowledgement message comprises updated global snapshot information, so that the first processing node (400) updates global snapshot information in a cache according to a number of the version.

7. A cluster, comprising multiple processing nodes (400) according to any one of claims 4 to 5 and the central node (600) according to claim 6.

## Patentansprüche

1. Transaktionsverarbeitungsverfahren (100), das Folgendes umfasst:
Empfangen (S110), durch einen Verarbeitungsknoten (400) in einem Cluster, der mehrere Verarbeitungsknoten (400) enthält, der neuesten globalen Snapshot-Informationen, die von einem Zentralknoten (600) in dem Cluster gemäß einem voreingestellten Zeitintervall zu jedem Verarbeitungsknoten (400) gesendet werden, wobei die globalen Snapshot-Informationen einen Transaktionsidentifikator umfassen, um den Verarbeitungsknoten (400) über eine aktuell laufende Transaktion in dem Cluster zu benachrichtigen, und wobei die globalen Snapshot-Informationen ferner eine Snapshot-Versionsnummer umfassen, die verwendet wird, um eine Version der globalen Snapshot-Informationen zu identifizieren;
Speichern (S120), durch den Verarbeitungsknoten (400), der empfangenen globalen Snapshot-Informationen in einem Cache;
Senden (S302), durch den Verarbeitungsknoten (400) in dem Cluster, einer ersten Aktualisierungsnachricht zu dem Zentralknoten (600) in dem Cluster, wenn der Verarbeitungsknoten (400) mit der Verarbeitung einer nicht schreibgeschützten Transaktion beginnt, wobei die erste Aktualisierungsnachricht verwendet wird, den Zentralknoten (600) anzuweisen, die von dem Zentralknoten (600) gespeicherten globalen Snapshot-Informationen entsprechend einer Tatsache, dass der Verarbeitungsknoten (400) mit der Verarbeitung der nicht schreibgeschützten Transaktion beginnt, zu aktualisieren;
Verarbeiten (S130), durch den Verarbeitungsknoten (400), der Transaktion gemäß den in dem Cache gespeicherten globalen Snapshot-Informationen, ohne die neuesten Snapshot-Informationen von dem Zentralknoten (600) zu erhalten;
Senden (S306), zu dem Zentralknoten (600), wenn der Verarbeitungsknoten (400) mit der Verarbeitung der nicht schreibgeschützten Transaktion fertig ist, einer zweiten Aktualisierungsnachricht, die ein Ende der Transaktionsverarbeitung des Verarbeitungsknotens (400) angibt, so dass der Zentralknoten (600) die globalen Snapshot-Informationen gemäß der zweiten Aktualisierungsnachricht aktualisiert;
Empfangen, durch den Verarbeitungsknoten (400), einer Bestätigungsnachricht, die von dem Zentralknoten (600) gesendet wird, und die verwendet wird, um anzugeben, dass der Zentralknoten (600) eine Aktualisierung der globalen Snapshot-Informationen abschließt, wobei die Bestätigungsnachricht aktualisierte globale Snapshot-Informationen umfasst; und
Vergleichen, durch den Verarbeitungsknoten (400), einer in der Bestätigungsnachricht enthaltenen Snapshot-Versionsnummer, die in den globalen Snapshot-Informationen enthalten ist, mit der Snapshot-Versionsnummer, die in den im Cache gespeicherten globalen Snapshot-Informationen enthalten ist, und Aktualisieren (S309), durch den Verarbeitungsknoten (400), der im Cache gespeicherten globalen Snapshot-Informationen auf die globalen Snapshot-Informationen in der Bestätigungsnachricht, wenn die in den globalen Snapshot-Informationen in der Bestätigungsnachricht enthaltene Snapshot-Versionsnummer höher als die Snapshot-Versionsnummer ist, die in den im Cache gespeicherten globalen Snapshot-Informationen enthalten ist.

2. Verfahren gemäß Anspruch 1, wobei die Verarbeitung (S130), durch den Verarbeitungsknoten (400), der Transaktion gemäß den im Cache gespeicherten globalen Snapshot-Informationen Folgendes umfasst:
Verarbeiten, durch den Verarbeitungsknoten (400), der Transaktion gemäß den globalen Snapshot-Informationen, die von dem Zentralknoten (600) gemäß dem voreingestellten Zeitintervall gesendet werden; oder
Verarbeiten, durch den Verarbeitungsknoten (400), der Transaktion gemäß den globalen Snapshot-Informationen, die in der von dem Zentralknoten (600) gesendeten Bestätigungsnachricht enthalten sind, wobei die Bestätigungsnachricht verwendet wird, um anzugeben, dass der Zentralknoten (600) die Aktualisierung der globalen Snapshot-Informationen gemäß der von dem Verarbeitungsknoten (400) gesendeten zweiten Aktualisierungsnachricht vollendet.

3. Transaktionsverarbeitungsverfahren (200), das Folgendes umfasst:
Erzeugen (S210), durch einen Zentralknoten (600) in einem Cluster, der mehrere Verarbeitungsknoten (400) enthält, der neuesten globalen Snapshot-Informationen, wobei die globalen Snapshot-Informationen einen Transaktionsidentifikator umfassen, um einen Verarbeitungsknoten (400) über eine aktuell laufende Transaktion in dem Cluster zu benachrichtigen, und wobei die globalen Snapshot-Informationen ferner eine Snapshot-Versionsnummer enthalten, und die Snapshot-Versionsnummer verwendet wird, eine Version der globalen Snapshot-Informationen zu identifizieren, so dass die Verarbeitungsknoten (400) globale Snapshot-Informationen in einem Cache gemäß einer Nummer der Version aktualisieren; und
Senden (S220), durch den Zentralknoten (600), der globalen Snapshot-Informationen zu jedem Verarbeitungsknoten (400) in dem Cluster gemäß einem voreingestellten Zeitintervall, so dass jeder Verarbeitungsknoten (400) Transaktionen gemäß den globalen Snapshot-Informationen verarbeitet;
Empfangen, durch den Zentralknoten (600), einer von einem ersten Verarbeitungsknoten (400) gesendeten ersten Aktualisierungsnachricht, wobei die erste Aktualisierungsnachricht verwendet wird, einen Anfang einer Transaktionsverarbeitung einer nicht schreibgeschützten Transaktion des ersten Verarbeitungsknotens (400) anzugeben;
Aktualisieren (S303), durch den Zentralknoten (600), der globalen Snapshot-Informationen gemäß der ersten Aktualisierungsnachricht; und
Empfangen, durch den Zentralknoten (600), einer von dem ersten Verarbeitungsknoten (400) gesendeten zweiten Aktualisierungsnachricht, wobei die Aktualisierungsnachricht verwendet wird, ein Ende einer Transaktionsverarbeitung der nicht schreibgeschützten Transaktion des ersten Verarbeitungsknotens (400) anzugeben;
Aktualisieren (S307), durch den Zentralknoten (600), der globalen Snapshot-Informationen gemäß der zweiten Aktualisierungsnachricht; und
Senden (S308), durch den Zentralknoten (600), einer Bestätigungsnachricht an den ersten Verarbeitungsknoten (400), wobei die Bestätigungsnachricht aktualisierte globale Snapshot-Informationen enthält, so dass der erste Verarbeitungsknoten (400) globale Snapshot-Informationen in einem Cache gemäß einer Nummer der Version aktualisiert.

4. Verarbeitungsknoten (400), wobei der Verarbeitungsknoten (400) einem Cluster angehört, der mehrere Verarbeitungsknoten (400) enthält, und der Verarbeitungsknoten (400) Folgendes umfasst:
ein Empfangsmodul (410), das dazu ausgelegt ist, die neuesten globalen Snapshot-Informationen, die von einem Zentralknoten (600) in dem Cluster gemäß einem voreingestellten Zeitintervall zu jedem Verarbeitungsknoten (400) gesendet werden, zu empfangen, wobei die globalen Snapshot-Informationen einen Transaktionsidentifikator umfassen, um den Verarbeitungsknoten (400) über eine aktuell laufende Transaktion in dem Cluster zu benachrichtigen, und wobei die globalen Snapshot-Informationen ferner eine Snapshot-Versionsnummer umfassen, die verwendet wird, um eine Version der globalen Snapshot-Informationen zu identifizieren;
ein Speichermodul (420), das dazu ausgelegt ist, die von dem Empfangsmodul empfangenen globalen Snapshot-Informationen in einem Cache zu speichern; und
ein Sendemodul, das dazu ausgelegt ist, zu dem Zentralknoten (600), wenn der Verarbeitungsknoten (400) mit der Verarbeitung der nicht schreibgeschützten Transaktion beginnt, eine erste Aktualisierungsnachricht zu senden, die einen Anfang der nicht schreibgeschützten Transaktion des Verarbeitungsknotens (400) angibt, so dass der Zentralknoten (600) die globalen Snapshot-Informationen gemäß der ersten Aktualisierungsnachricht aktualisiert;
ein Verarbeitungsmodul (430), das dazu ausgelegt ist, die Transaktion gemäß den in dem Cache gespeicherten globalen Snapshot-Informationen zu verarbeiten, ohne die neuesten Snapshot-Informationen von dem Zentralknoten (600) zu erhalten;
wobei das Sendemodul ferner dazu ausgelegt ist, zu dem Zentralknoten (600), wenn der Verarbeitungsknoten (400) mit der Verarbeitung der nicht schreibgeschützten Transaktion fertig ist, eine zweite Aktualisierungsnachricht zu senden, die ein Ende der Transaktionsverarbeitung des Verarbeitungsknotens (400) angibt, so dass der Zentralknoten (600) die globalen Snapshot-Informationen gemäß der zweiten Aktualisierungsnachricht aktualisiert;
das Empfangsmodul (410) ferner dazu ausgelegt ist, eine Bestätigungsnachricht, die von dem Zentralknoten (600) gesendet wird, und die verwendet wird, um anzugeben, dass der Zentralknoten (600) eine Aktualisierung der globalen Snapshot-Informationen vollendet,
zu empfangen, wobei die Bestätigungsnachricht aktualisierte globale Snapshot-Informationen umfasst; und
das Speichermodul (420) ferner dazu ausgelegt ist, eine Snapshot-Versionsnummer, die in den globalen Snapshot-Informationen in der von dem Empfangsmodul empfangenen Bestätigungsnachricht enthalten ist, mit der Snapshot-Versionsnummer, die in den im Cache gespeicherten globalen Snapshot-Informationen enthalten ist, zu vergleichen, und der Verarbeitungsknoten (400) die im Cache gespeicherten globalen Snapshot-Informationen auf die globalen Snapshot-Informationen in der Bestätigungsnachricht aktualisiert, wenn die in den globalen Snapshot-Informationen in der Bestätigungsnachricht enthaltene Snapshot-Versionsnummer höher als die Snapshot-Versionsnummer ist, die in den im Cache gespeicherten globalen Snapshot-Informationen enthalten ist.

5. Verarbeitungsknoten (400) gemäß Anspruch 4, wobei das Verarbeitungsmodul (430) insbesondere für Folgendes ausgelegt ist:
Verarbeiten der Transaktion gemäß den globalen Snapshot-Informationen, die von dem Zentralknoten (600) gemäß dem voreingestellten Zeitintervall gesendet wurden; oder
Verarbeiten der Transaktion gemäß den globalen Snapshot-Informationen, die in der von dem Zentralknoten (600) gesendeten Bestätigungsnachricht enthalten sind, wobei die Bestätigungsnachricht verwendet wird, um anzugeben, dass der Zentralknoten (600) die Aktualisierung der globalen Snapshot-Informationen gemäß der von dem Verarbeitungsknoten (400) gesendeten zweiten Aktualisierungsnachricht vollendet.

6. Zentralknoten (600), wobei der Zentralknoten (600) einem Cluster angehört, der mehrere Verarbeitungsknoten (400) enthält, und der Zentralknoten (600) Folgendes umfasst:
ein Erzeugungsmodul (610), das dazu ausgelegt ist, die neuesten globalen Snapshot-Informationen zu erzeugen, wobei die globalen Snapshot-Informationen einen aktuellen Transaktionsidentifikator umfassen, um einen Verarbeitungsknoten (400) über eine aktuell laufende Transaktion in dem Cluster zu benachrichtigen, und wobei die globalen Snapshot-Informationen ferner eine Snapshot-Versionsnummer enthalten, und die Snapshot-Versionsnummer verwendet wird, eine Version der globalen Snapshot-Informationen zu identifizieren, so dass der Verarbeitungsknoten (400) globale Snapshot-Informationen in einem Cache gemäß einer Nummer der Version aktualisiert;
ein Sendemodul (620), das dazu ausgelegt ist, die von dem Erzeugungsmodul erzeugten globalen Snapshot-Informationen zu jedem Verarbeitungsknoten (400) in dem Cluster gemäß einem voreingestellten Zeitintervall zu senden, so dass jeder Verarbeitungsknoten (400) Transaktionen gemäß den globalen Snapshot-Informationen verarbeitet;
ein Empfangsmodul, das dazu ausgelegt ist, eine von einem ersten Verarbeitungsknoten (400) gesendete erste Aktualisierungsnachricht zu empfangen, wobei die erste Aktualisierungsnachricht verwendet wird, einen Anfang einer Transaktionsverarbeitung einer nicht schreibgeschützten Transaktion des ersten Verarbeitungsknotens (400) anzugeben; und
ein Aktualisierungsmodul, das dazu ausgelegt ist, die globalen Snapshot-Informationen gemäß der von dem Empfangsmodul empfangenen ersten Aktualisierungsnachricht zu aktualisieren; wobei
das Empfangsmodul ferner dazu ausgelegt ist, eine von dem ersten Verarbeitungsknoten (400) gesendete zweite Aktualisierungsnachricht zu empfangen, wobei die Aktualisierungsnachricht verwendet wird, ein Ende einer Transaktionsverarbeitung der nicht schreibgeschützten Transaktion des ersten Verarbeitungsknotens (400) anzugeben; und
das Aktualisierungsmodul ferner dazu ausgelegt ist, die globalen Snapshot-Informationen gemäß der von dem Empfangsmodul empfangenen zweiten Aktualisierungsnachricht zu aktualisieren; und
das Sendemodul (620) ferner für Folgendes ausgelegt ist:
Senden einer Bestätigungsnachricht an den Verarbeitungsknoten (400), wobei die Bestätigungsnachricht aktualisierte globale Snapshot-Informationen enthält, so dass der erste Verarbeitungsknoten (400) globale Snapshot-Informationen in einem Cache gemäß einer Nummer der Version aktualisiert.

7. Cluster, der mehrere Verarbeitungsknoten (400), gemäß einem beliebigen der Ansprüche 4 bis 5 und den Zentralknoten (600) gemäß Anspruch 6 umfasst.

## Revendications

1. Procédé de traitement de transaction (100), comprenant :
la réception (S 110), par un noeud de traitement (400) dans une grappe incluant de nombreux noeuds de traitement (400), de la dernière information générale d'instantané envoyée par un noeud central (600) dans la grappe à chaque noeud de traitement (400) conformément à un intervalle temporel prédéfini, l'information générale d'instantané comprenant un identifiant de transaction, de façon à notifier le noeud de traitement (400) d'une transaction en cours dans la grappe, et l'information générale d'instantané comprenant en outre un numéro de version d'instantané, le numéro de version d'instantané étant utilisé pour identifier une version de l'information générale d'instantané ;
la mémorisation (S120), par le noeud de traitement (400), de l'information générale d'instantané reçue dans une mémoire cache ;
l'envoi (S302), par le noeud de traitement (400) dans la grappe, d'un premier message de mise à jour au noeud central (600) dans la grappe lorsque le noeud de traitement (400) commence le traitement d'une transaction non en lecture seule, le premier message de mise à jour étant utilisé pour donner l'instruction au noeud central (600) de mettre à jour, conformément au fait que le noeud de traitement (400) commence le traitement de la transaction non en lecture seule, l'information générale d'instantané mémorisée par le noeud central (600) ;
le traitement (S130), par le noeud de traitement (400), de la transaction conformément à l'information générale d'instantané mémorisée dans la mémoire cache sans obtenir la dernière information générale d'instantané du noeud central (600) ;
l'envoi (S306), au noeud central (600), lorsque le noeud de traitement (400) termine le traitement de la transaction non en lecture seule, d'un second message de mise à jour qui indique la fin du traitement de la transaction du noeud de traitement (400), afin que le noeud central (600) mette à jour l'information générale d'instantané conformément au second message de mise à jour ;
la réception, par le noeud de traitement (400), d'un message d'accusé de réception qui est envoyé par le noeud central (600) et qui est utilisé pour indiquer que le noeud central (600) termine une mise à jour de l'information générale d'instantané, le message d'accusé de réception comprenant une information générale d'instantané mise à jour ; et
la comparaison, par le noeud de traitement (400), d'un numéro de version d'instantané compris dans l'information générale d'instantané dans le message d'accusé de réception avec le numéro de version d'instantané compris dans l'information générale d'instantané mémorisée dans la mémoire cache, et la mise à jour (S309), par le noeud de traitement (400), de l'information générale d'instantané mémorisée dans la mémoire cache sur l'information générale d'instantané dans le message d'accusé de réception lorsque le numéro de version d'instantané compris dans l'information générale d'instantané du message d'accusé de réception est plus élevé que le numéro de version d'instantané compris dans l'information générale d'instantané mémorisée dans la mémoire cache.

2. Procédé selon la revendication 1, dans lequel le traitement (S130), par le noeud de traitement (400), de la transaction conformément à l'information générale d'instantané mémorisée dans la mémoire cache comprend :
le traitement, par le noeud de traitement (400), de la transaction conformément à l'information générale d'instantané envoyée par le noeud central (600) conformément à l'intervalle temporel prédéfini ; ou
le traitement, par le noeud de traitement (400), de la transaction conformément à l'information générale d'instantané comprise dans le message d'accusé de réception envoyé par le noeud central (600), le message d'accusé de réception étant utilisé pour indiquer que le noeud central (600) termine la mise à jour de l'information générale d'instantané conformément au second message de mise à jour envoyé par le noeud de traitement (400).

3. Procédé de traitement de transaction (200), comprenant :
la génération (S210), par un noeud central (600) dans une grappe comprenant de nombreux noeuds de traitement (400), d'une dernière information générale d'instantané, l'information générale d'instantané comprenant un identifiant de transaction de façon à notifier un noeud de traitement (400) d'une transaction en cours dans la grappe, et l'information générale d'instantané comprenant en outre un numéro de version d'instantané, le numéro de version d'instantané étant utilisé pour identifier une version de l'information générale d'instantané, de sorte que les noeuds de traitement (400) mettent à jour l'information générale d'instantané dans une mémoire cache conformément à un numéro de version ; et
l'envoi (S220), par le noeud central (600), de l'information générale d'instantané à chaque noeud de traitement (400) dans la grappe conformément à un intervalle temporel prédéterminé, de sorte que chaque noeud de traitement (400) traite les transactions conformément à l'information générale d'instantané ;
la réception, par le noeud central (600), d'un premier message de mise à jour envoyé par un premier noeud de traitement (400), le premier message de mise à jour étant utilisé pour indiquer un début de traitement de transaction d'une transaction non en lecture seule du premier noeud de traitement (400) ;
la mise à jour (S303), par le noeud central (600), de l'information générale d'instantané conformément au premier message de mise à jour ; et
la réception, par le noeud central (600), d'un second message de mise à jour envoyé par le premier noeud de traitement (400), le message de mise à jour étant utilisé pour indiquer une fin de traitement de transaction de la transaction non en lecture seule du premier noeud de traitement (400) ;
la mise à jour (S307), par le noeud central (600), de l'information générale d'instantané conformément au second message de mise à jour ; et
l'envoi (S308), par le noeud central (600), d'un message d'accusé de réception au premier noeud de traitement (400), le message d'accusé de réception comprenant une information générale d'instantané mise à jour, afin que le premier noeud de traitement (400) mette à jour l'information générale d'instantané dans une mémoire cache conformément à un numéro de version.

4. Noeud de traitement (400), le noeud de traitement (400) appartenant à une grappe comprenant de nombreux noeuds de traitement (400) et le noeud de traitement (400) comprenant :
un module de réception (410), configuré pour recevoir une dernière information générale d'instantané envoyée par un noeud central (600) dans la grappe à chaque noeud de traitement (400) conformément à un intervalle de temps prédéfini, l'information générale d'instantané comprenant un identifiant de transaction, afin de notifier le noeud de traitement (400) d'une transaction en cours dans la grappe, et l'information générale d'instantané comprenant en outre un numéro de version d'instantané, le numéro de version d'instantané étant utilisé pour identifier une version de l'information générale d'instantané ;
un module de mémorisation (420), configuré pour mémoriser dans une mémoire cache l'information générale d'instantané reçue par le module de réception ; et
un module d'envoi, configuré pour envoyer, au noeud central (600) lorsque le noeud de traitement (400) commence le traitement d'une transaction non en lecture seule, un premier message de mise à jour qui indique un début de la transaction non en lecture seule du noeud de traitement (400), afin que le noeud central (600) mette à jour l'information générale d'instantané conformément au premier message de mise à jour ;
un module de traitement (430), configuré pour traiter la transaction conformément à l'information générale d'instantané mémorisée dans la mémoire cache sans obtenir la dernière information générale d'instantané du noeud central (600) ;
dans lequel le module d'envoi est en outre configuré pour envoyer, au noeud central (600) lorsque le noeud de traitement (400) termine le traitement de la transaction non en lecture seule, un second message de mise à jour qui indique une fin d'un traitement de transaction du noeud de traitement (400), afin que le noeud central (600) mette à jour l'information générale d'instantané conformément au second message de mise à jour ;
le module de réception (410) est en outre configuré pour recevoir un message d'accusé de réception qui est envoyé par le noeud central (600) et qui est utilisé pour indiquer que le noeud central (600) termine une mise à jour de l'information générale d'instantané, le message d'accusé de réception comprenant une information générale d'instantané mise à jour ; et
le module de mémorisation (420) est en outre configuré pour comparer un numéro de version d'instantané compris dans l'information générale d'instantané dans le message d'accusé de réception reçu par le module de réception avec le numéro de version d'instantané compris dans l'information générale d'instantané mémorisée dans la mémoire cache, et le noeud de traitement (400) met à jour l'information générale d'instantané mémorisée dans la mémoire cache sur l'information générale d'instantané dans le message d'accusé de réception lorsque le numéro de version d'instantané compris dans l'information générale d'instantané du message d'accusé de réception est plus élevé que le numéro de version d'instantané compris dans l'information générale d'instantané mémorisée dans la mémoire cache.

5. Noeud de traitement (400) selon la revendication 4, dans lequel le module de traitement (430) est spécifiquement configuré pour :
traiter la transaction conformément à l'information générale d'instantané envoyée par le noeud central (600) conformément à l'intervalle de temps prédéfini ; ou
traiter la transaction conformément à l'information générale d'instantané comprise dans le message d'accusé de réception envoyé par le noeud central (600), le message d'accusé de réception étant utilisé pour indiquer que le noeud central (600) termine la mise à jour de l'information générale d'instantané conformément au second message de mise à jour envoyé par le noeud de traitement (400).

6. Noeud central (600), le noeud central (600) appartenant à une grappe comprenant de nombreux noeuds de traitement (400), et le noeud central (600) comprenant :
un module de génération (610), configuré pour générer une dernière information générale d'instantané, l'information générale d'instantané comprenant un identifiant de transaction en cours, afin de notifier un noeud de traitement (400) d'une transaction en cours dans la grappe, et l'information générale d'instantané comprenant en outre un numéro de version d'instantané, et le numéro de version d'instantané étant utilisé pour identifier une version de l'information générale d'instantané, afin que le noeud de traitement (400) mette à jour l'information générale d'instantané dans une mémoire cache conformément à un numéro de la version ;
un module d'envoi (620), configuré pour envoyer l'information générale d'instantané générée par le module de génération à chaque noeud de traitement (400) dans la grappe conformément à un intervalle de temps prédéfini, afin que chaque noeud de traitement (400) traite les transactions conformément à l'information générale d'instantané ;
un module de réception, configuré pour recevoir un premier message de mise à jour envoyé par un premier noeud de traitement (400), le premier message de mise à jour étant utilisé pour indiquer un début de traitement de transaction d'une transaction non en lecture seule du premier noeud de traitement (400) ; et
un module de mise à jour, configuré pour mettre à jour l'information générale d'instantané conformément au premier message de mise à jour reçu par le module de réception ; dans lequel
le module de réception est en outre configuré pour recevoir un second message de mise à jour envoyé par le premier noeud de traitement (400), le message de mise à jour étant utilisé pour indiquer une fin de traitement de transaction de la transaction non en lecture seule du premier noeud de traitement (400) ; et
le module de mise à jour est en outre configuré pour mettre à jour l'information générale d'instantané conformément au second message de mise à jour reçu par le module de réception ; et
le module d'envoi (620) est en outre configuré pour :
envoyer un message d'accusé de réception au noeud de traitement (400), le message d'accusé de réception comprenant une information générale d'instantané mise à jour, afin que le premier noeud de traitement (400) mette à jour l'information générale d'instantané dans une mémoire cache conformément à un numéro de la version.

7. Grappe, comprenant de nombreux noeuds de traitement (400) selon l'une quelconque des revendications 4 et 5 et le noeud central (600) selon la revendication 6.
